(19) Europäisches Patentamt
European Patent Office
Office européen des brevets

(11) **EP 2 548 747 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
***B60C 23/00*** *(2006.01)*

(21) Anmeldenummer: **12001370.1**

(22) Anmeldetag: **01.03.2012**

(54) **Verfahren und Vorrichtung zur Regelung des Reifendrucks von Fahrzeugen**

Method and system for regulating the tyre pressure of vehicles

Procédé et dispositif de réglage de la pression des pneus de véhicules

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2011 DE 102011108110**

(43) Veröffentlichungstag der Anmeldung:
**23.01.2013 Patentblatt 2013/04**

(73) Patentinhaber: **MAN Truck & Bus SE**
**80995 München (DE)**

(72) Erfinder: **Gutzeit, Reinhard**
**82049 Pullach (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**DE-A1- 10 306 498      DE-A1-102004 051 197**
**DE-B3- 10 336 330      US-A1- 2007 068 238**

EP 2 548 747 B1

**Beschreibung**

Die Erfindung betrifft ein Verfahren zur Regelung des Reifendrucks von Kraftfahrzeugen nach dem Oberbegriff des Patentanspruchs 1 sowie eine Vorrichtung nach dem Patentanspruch 11.

Der Reifendruck von Fahrzeugen kann während des Fahrzeugbetriebs an unterschiedliche Fahrbetriebsbedingungen angepasst werden, um beispielsweise Fahrkomfort, Lenkverhalten, Fahrstabilität, Fahrsicherheit und die Haltbarkeit der Reifen zu verbessern.

Aus der DE 40 14 379 A1 ist ein Verfahren zur Regelung des Reifendrucks von Fahrzeugreifen bekannt, bei dem der Reifendruck in Abhängigkeit von der Fahrgeschwindigkeit und in Abhängigkeit weiterer Fahrbetriebsbedingungen geregelt wird. Beispielsweise ist dabei vorgesehen, dass für Stadtfahrten ein anderer Reifendruck als für Überlandfahrten eingestellt wird. Der Reifendruck kann dabei auch in Abhängigkeit von der Reifengröße und der Reifenbauart variieren.

Aus der DE 41 09 392 A1 ist ein weiteres Verfahren und eine Vorrichtung zur Druckregelung in Reifen für Fahrzeuge bekannt, bei dem eine Steuerelektronik über Messwertgeber unterschiedliche Zustandsgrößen des Fahrzeugs erfasst. Die Regelung des Reifendrucks kann dabei auch unter Berücksichtigung des Antriebsschlupfs erfolgen.

Aus der DE 10 2004 051 197 A1 ist ein Verfahren zur Temperaturüberwachung eines Reifens bekannt, mit dem eine Steuerung des Reifendrucks durchgeführt wird. Je nach Fahrbahnbeschaffenheit kann der Fahrer aus einer Tabelle einen Reifendruck-Sollwert entnehmen und diesen in das Druckregelsystem eingeben.

Weiterhin ist eine Vorrichtung zur Erzielung einer erhöhten Längsverzögerung eines Fahrzeugs durch Veränderung des Reifenluftdrucks aus der DE 103 36 330 B3 bekannt. Mit dieser Vorrichtung wird der Reifendruck unter Berücksichtigung des Reibwerts zwischen Reifen und Fahrbahn gemäß einer Kennlinie verändert. Dabei kann der Reibwert als eine Funktion des Reifentyps unter Verwendung einer Kennlinie ermittelt werden.

In der US 2007/0068238 A1 wird ein Druckluftsystem für die Reifen landwirtschaftlicher Fahrzeuge beschrieben, bei dem der Reifendruck in Abhängigkeit von der Bodenbeschaffenheit eingestellt wird. Hierzu ist wenigstens ein Sensor vorgesehen, der die Bodenbeschaffenheit detektiert.

Zur Bestimmung der Abnutzung an einer Lauffläche eines Fahrzeugrads offenbart die DE 103 06 498 A1 ein Verfahren, mit dem eine Bestimmung der Profiltiefe eines Fahrzeugreifens durchgeführt wird. Dabei werden die Radunterdrehungen ausgewertet, um ein Maß für die Nutzung der Lauffläche zu erhalten.

Der Erfindung liegt die Aufgabe zugrunde, ein Verfahren und eine Vorrichtung zur Regelung des Reifendrucks von Fahrzeugen anzugeben, womit eine bessere Anpassung des Reifendrucks an jeweils aktuelle Fahrbetriebsbedingungen erreicht werden kann.

Die Aufgabe, soweit sich diese auf das Verfahren bezieht, wird durch die Merkmale des Patentanspruchs 1 gelöst, während die Aufgabe, soweit sie sich auf die Vorrichtung bezieht, durch die Merkmale des Patentanspruchs 11 gelöst wird. Bevorzugte Weiterbildungen der Erfindung sind in den Unteransprüchen offenbart.

Gemäß Patentanspruch 1 werden während des Fahrbetriebs Fahrbahnparameter, die den aktuellen Fahrbahnzustand betreffen, erfasst und in Abhängigkeit von den Fahrbahnparametern wird die Regelung des Reifendrucks beeinflusst. Durch die unmittelbare Erfassung von Fahrbahnparametern, wie Rauheit der Oberfläche, Welligkeit der Fahrbahn, Oberflächentemperatur an der Fahrbahn, etc., kann eine Aussage über den Fahrbahnzustand bzw. bevorzugt eine Klassifizierung des Fahrbahnzustands erfolgen. Die Regelung des Reifendrucks kann dann unter Berücksichtigung weiterer Fahrbetriebsparameter und/oder Fahrzeugparameter an den Fahrbahnzustand angepasst werden, um beispielsweise eine Verbesserung der Traktion zu erreichen oder um die Wirtschaftlichkeit des Fahrbetriebs zu erhöhen. Die Regelung des Reifendrucks hängt somit auch von Zielvorgaben ab, die je nach Einsatzbereich des Fahrzeugs manuell oder auch automatisch geändert werden können. Mit welcher Gewichtung dabei unterschiedliche Zielvorgaben in die Regelung des Reifendrucks einbezogen werden, lässt sich durch eine entsprechende Programmierung der Reifendruckregelanlage festlegen.

Insbesondere in Verbindung mit Fahrzeugparametern, die sich auf die technischen Merkmale der verwendeten Fahrzeugreifen beziehen, kann bei Kenntnis der aktuellen Fahrbahnparameter eine optimale Regelung des Reifendrucks erfolgen. Dabei kann es besonders vorteilhaft sein, den Fahrbahnzustand anhand der ermittelten Fahrbahnparameter zu klassifizieren und diesen beispielsweise in fünf unterschiedliche Fahrbahnzustandsklassen einzuteilen. Eine Grobeinteilung könnte dabei die nachfolgenden Fahrbahnzustandsklassen umfassen: Eisglätte, schneebedeckte Fahrbahn, loser Untergrund, raue Fahrbahnoberfläche, trockene/nasse Asphaltfahrbahn. Der Reifendruck kann nun an die festgestellte Fahrbahnzustandsklasse unter Berücksichtigung weiterer Parameter, wie Geschwindigkeit, Achslast, eingestellt werden.

Besonders vorteilhaft ist es, den Fahrbahnreibwert zu ermitteln, und zwar kann dies durch Auswertung von Schallsignalen und/oder Radarsignalen und/oder Bildinformationen von der Fahrbahnoberfläche erfolgen. In Verbindung mit abgespeicherten, empirisch ermittelten Reifenkennlinien, die einen Bezug zu Fahrbahnreibwerten haben, kann der Reifendruck in den Fahrzeugreifen optimiert werden.

Die Einteilung in Fahrbahnzustandsklassen kann vorteilhaft dadurch erfolgen, dass in einer Fahrbahndatenbank Referenzwerte der Fahrbahnparameter enthalten sind, die unterschiedlichen Fahrbahnzustandsklassen zugeordnet sind. Durch einen Vergleich der aktuell gemessenen Fahrbahnparameter mit den abgespeicherten Referenzwerten kann nun eine Bestimmung der aktuellen Fahrbahnklasse erfolgen.

Die Regelung des Reifendrucks wird erfindungsgemäß je nach Einsatzbedingungen und Zustand des Fahrzeugs und unter Berücksichtigung von Reifenparametern in einem maximal möglichen Bereich durchgeführt, nämlich zwischen dem reifenspezifischen und/oder belastungsspezifischen (z. B. abhängig von Achslast und/oder Geschwindigkeit) Maximaldruck und dem Mindestdruck. Hierzu ist es erforderlich, dass die entsprechenden Reifenparameter in einem Datenspeicher abgespeichert sind. Dadurch kann beispielsweise bei sehr schwierigen Einsatzbedingungen zur Erhöhung der Traktion, beispielsweise beim Anfahren auf losem Untergrund, eine Absenkung des Reifendrucks auf den Mindestdruck erfolgen, wobei natürlich auch die Achslast an den jeweiligen Reifen zu berücksichtigen ist.

Die abgespeicherten Reifenparameter berücksichtigen erfindungsgemäß die Veränderung der Reifeneigenschaften in Abhängigkeit vom Reifenverschleiß, so dass dann auch eine Optimierung des Reifendrucks unter Berücksichtigung des Reifenverschleißes möglich ist. Zu diesem Zweck kann der Reifenverschleiß dadurch ermittelt werden, dass einerseits die Geschwindigkeit und/oder die zurückgelegte Fahrstrecke aus der Raddrehzahl und dem ursprünglichen Radumfang ermittelt wird, und andererseits mittels eines globalen Navigationssystems (GPS = Global Positioning System). Durch einen Vergleich der ermittelten Werte kann dann die Verringerung des Radumfangs gegenüber dem ursprünglichen Radumfang berechnet werden, was ein direktes Maß für den Reifenverschleiß darstellt.

Durch die Ermittlung des Reifenverschleißes ergibt sich die Möglichkeit, den Rollwiderstand, die Reifenhaftung, den Schlupf und ggf. weitere Fahrzeugeigenschaften in die Regelung des Reifendrucks einfließen zu lassen. Dies ist auf einfache Weise dann möglich, wenn in Abhängigkeit vom Reifenverschleiß entsprechende Reifenkennwerte in der Reifendruckregelanlage bzw. in einem Datenspeicher gespeichert und für die Regelung des Reifendrucks verwendbar sind.

Die erfindungsgemäße Vorrichtung gemäß Patentanspruch 11 sieht vor, dass Radargeräte, Kamerasysteme, Infrarotsysteme und/oder Schallsensoren vom Zustand der Fahrbahnoberfläche beeinflusste Signale empfangen, die zur Klassifizierung des Fahrbahnzustands dienen. Dabei können Weitbereichsradarsysteme und Nahbereichsradarsysteme sowie bildgebende Systeme zum Einsatz kommen. Die verwendeten Schallsensoren können ein breiteres Frequenzband als den Hörbereich abdecken, beispielsweise können auch Ultraschallsensoren zum Einsatz kommen. Dabei können einzelne oder mehrere dieser Einrichtungen zur Bestimmung des Fahrbahnzustandes verwendet werden, wobei auch Infrarotsysteme eingesetzt werden können.

Besonders vorteilhaft ist es außerdem, Signale von Fahrsicherheitssystemen und/oder deren Sensoren in der Reifendruckregelanlage bei der Regelung des Reifendrucks zu berücksichtigen, da diese Signale ebenfalls z. B. Fahrbetriebsparameter kennzeichnen, die bei der Optimierung des Reifendrucks berücksichtigt werden können.

Die Erfindung wird nachfolgend anhand eines in der Zeichnung dargestellten Ausführungsbeispiels näher erläutert.

Es zeigen:

Figur 1 ein Blockdiagramm, welches die Signalverbindungen zwischen einer Reifendruckregelanlage und einer Vielzahl von Sensoren und weiteren Fahrzeugeinrichtungen zeigt, und

Figur 2 ein Diagramm, das für drei unterschiedliche Geschwindigkeiten eines Fahrzeugs vom Reifendruck abhängige Kennlinien für den Kraftstoffverbrauch, die Reifenlebensdauer sowie die Kraftstoff- und Reifenkosten enthält.

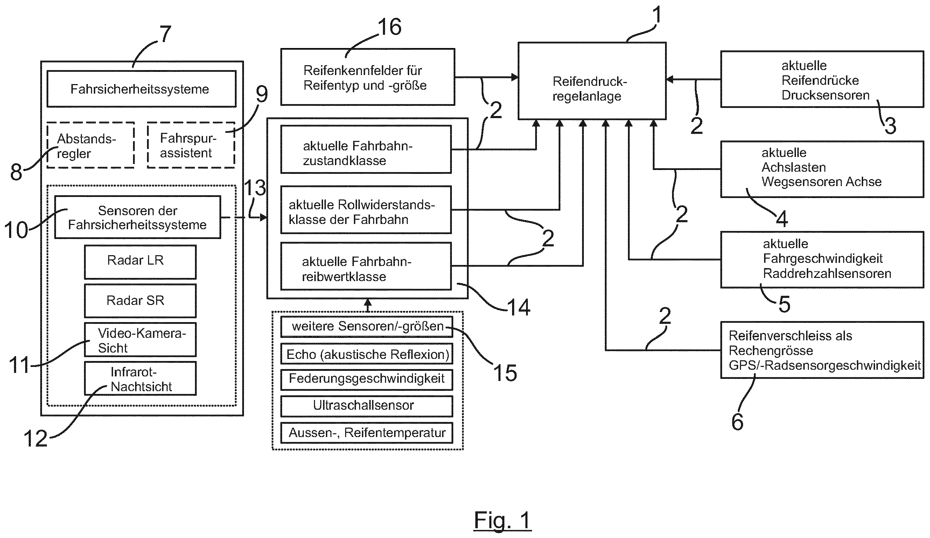

Das in Figur 1 dargestellte Blockdiagramm zeigt eine Reifendruckregelanlage 1, die über mehrere Datenleitungen 2 Fahrbetriebsparameter und Fahrzeugparameter empfängt, die den Zustand des Fahrzeugs und den Fahrbetrieb betreffen. Unter Zustand des Fahrzeugs ist dabei beispielsweise das Gewicht des Fahrzeugs, die Achslasten, der Zustand und die Beschaffenheit der Reifen und der aktuelle Reifendruck zu verstehen. Den Zustand des Fahrbetriebs können Angaben über die Fahrgeschwindigkeit und insbesondere über die Fahrbahnbeschaffenheit charakterisieren.

Die Reifendruckregelanlage 1 erhält über Drucksensoren 3 von sämtlichen Reifen des Fahrzeugs die aktuellen Reifendruckwerte. Wegsensoren 4 an den Achsen übermitteln an die Reifendruckregelanlage 1 die aktuellen Achslasten, Raddrehzahlsensoren 5 übermitteln die aktuelle Fahrgeschwindigkeit, die aus der Raddrehzahl und dem Neureifenumfang berechnet wird.

In einer Einrichtung 6 wird der Reifenverschleiß als Rechengröße bestimmt, und zwar aus der Differenz zwischen der mittels der Raddrehzahlsensoren 5 bestimmten Fahrgeschwindigkeit und der mittels GPS ermittelten tatsächlichen Fahrgeschwindigkeit. Bekanntlich lässt sich die Fahrgeschwindigkeit v mit der Gleichung

$$v = n \cdot \pi \cdot d$$

berechnen, wobei n die Raddrehzahl und d der Raddurchmesser ist.

Wird nun durch eine Ermittlung der Fahrgeschwindigkeit mittels GPS beispielsweise eine um 0,5 % geringere Fahrgeschwindigkeit ermittelt als unter Berücksichtigung der Raddrehzahl und des Neureifendurchmessers, so kann daraus auf einen um 0,5 % geringeren Reifendurchmesser d geschlossen werden. Der Reifenprofilverschleiß bezogen auf den Reifendurchmesser lässt sich somit genau bestimmen.

Im vorliegenden Ausführungsbeispiel sind im Fahrzeug außerdem Einrichtungen angeordnet, die Fahrsicherheitssystemen 7 zugeordnet sind. Die Einrichtungen können Abstandsregler 8, Fahrspurassistenten 9 und weitere Sensoren 10 der Fahrsicherheitssysteme umfassen. Ein Weitbereichsradar LR und ein Nachbereichsradar SR können ebenso wie ein im Sichtbereich arbeitendes Kamerasystem 11 und ein im Infrarotbereich arbeitendes Nachtsichtgerät 12 zur Ermittlung des Fahrbahnzustands Teil der Fahrsicherheitssysteme 7 sein.

Sämtliche Daten der Fahrsicherheitssysteme 7 werden über eine Datenleitung 13 an eine Klassifizierungseinrichtung 14 übermittelt, die unter Berücksichtigung von Sensorsignalen weiterer Sensoren 15 eine Klassifizierung des Fahrbahnzustands, des Rollwiderstands der Fahrbahn und/oder des Fahrbahnreibwerts vornimmt. Dabei können die weiteren Sensoren Echosignale, Federungsgeschwindigkeit, Ultraschallsignale, Außen- sowie Reifentemperatur-Signale bereitstellen. Anhand dieser Sensorsignale sowie der von den Fahrsicherheitssystemen 7 übermittelten Daten kann die Klassifizierungseinrichtung 14 die aktuelle Fahrbahnzustandsklasse, die aktuelle Rollwiderstandsklasse der Fahrbahn und die aktuelle Fahrbahnreibwertsklasse an die Reifendruckregelanlage 1 übertragen.

Der Reifendruckregelanlage 1 werden aus einem Datenspeicher 16 Reifenkennfelder für den am Fahrzeug verwendeten Reifentyp und dessen Reifengröße bereitgestellt, wobei die Reifenkennfelder beispielsweise Angaben über den Reifenrollwiderstand in Abhängigkeit vom Reifendruck sowie Angaben über den maximalen und minimalen Reifendruck in Abhängigkeit vom Reifenverschleiß enthalten können. Die Reifenkennfelder können auch die Tragfähigkeit der Reifen und weitere Reifenparameter-Kennlinien umfassen.

Anhand sämtlicher Informationen und Parameter, die den Fahrbetrieb und den Zustand des Fahrzeugs sowie den Zustand der Fahrbahnoberfläche betreffen, kann die Reifendruckregelanlage 1 unter Berücksichtigung von Reifenkennfeldern eine optimale Regelung des Reifendrucks in jedem der Fahrzeugreifen vornehmen, um eine maximale Betriebsfunktionalität oder Wirtschaftlichkeit zu erreichen.

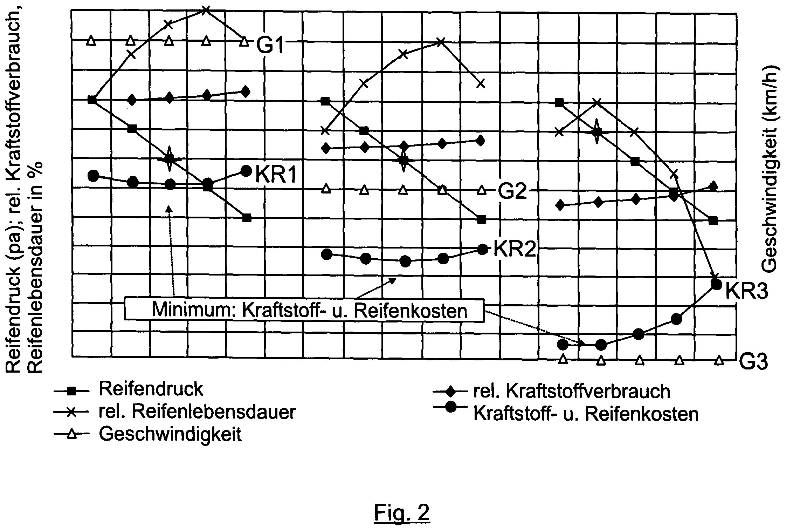

In dem Diagramm von Figur 2 sind für unterschiedliche Geschwindigkeiten G1, G2, G3 vom Reifendruck abhängige Verläufe für den relativen Kraftstoffverbrauch und die relative Reifenlebensdauer angegeben. Für jeweils fünf von links nach rechts linear abnehmende Reifendruckwerte wurden zu jeder der Geschwindigkeiten G1, G2, G3 Kennlinien für den Kraftstoffverbrauch und die Reifenlebensdauer ermittelt und in das Diagramm eingetragen. Der zugehörige Verlauf der Kraftstoff- und Reifenkosten ist jeweils in einer gepunkteten Kennlinie KR1, KR2, KR3 angegeben. Die Kennlinien KR1 bis KR3 zeigen, dass das Minimum der Kraftstoff- und Reifenkosten geschwindigkeitsabhängig und reifendruckabhängig ist. Somit kann eine Minimierung der Kraftstoff- und Reifenkosten durch eine entsprechende Regelung des Reifendrucks unter Berücksichtigung der jeweils aktuellen Geschwindigkeit erreicht werden.

**Patentansprüche**

1. Verfahren zur Regelung des Reifendrucks von Fahrzeugen, insbesondere Nutzfahrzeugen, in Abhängigkeit von Fahrbetriebsparametern und von Fahrzeugparametern, wobei während des Fahrbetriebs Fahrbahnparameter, die den aktuellen Fahrbahnzustand betreffen, erfasst werden, wobei in Abhängigkeit von den Fahrbahnparametern die Regelung des Reifendrucks beeinflusst wird, wobei die Regelung des Reifendrucks je nach Einsatzbedingungen und Zustand des Fahrzeugs und unter Berücksichtigung von Reifenparametern in einem Bereich zwischen dem reifenspezifischen und/oder belastungsspezifischen Maximaldruck und Mindestdruck erfolgt, **dadurch gekennzeichnet, dass** die abgespeicherten Reifenparameter die Veränderung der Reifeneigenschaften in Abhängigkeit vom Reifenverschleiß berücksichtigen.

2. Verfahren nach Anspruch 1, **dadurch gekennzeichnet, dass** die Fahrbahnparameter zur Klassifizierung des aktuellen Fahrbahnzustandes und/oder des Rollwiderstands der Fahrbahn und/oder des Fahrbahnreibwerts verwendet werden, und dass die Regelung des Reifendrucks unter Berücksichtigung der aktuellen Klassifizierung erfolgt.

3. Verfahren nach Anspruch 2, **dadurch gekennzeichnet, dass** zur Klassifizierung eine vorgegebene Anzahl von Fahrbahnzustandsklassen und/oder Rollwiderstandsklassen und/oder Fahrbahnreibwertklassen vorgesehen sind, und dass wenigstens eine dieser Klassen anhand der aktuellen Fahrbahnparameter ausgewählt und zur Regelung des Reifendrucks berücksichtigt wird.

4. Verfahren nach einem der vorhergehenden Ansprüche, **dadurch gekennzeichnet, dass** der Fahrbahnreibwert durch die Auswertung von Schallsignalen und/oder Radarsignalen und/oder Bildinformationen ermittelt wird, und dass in Abhängigkeit von dem Fahrbahnreibwert die Regelung des Reifendrucks beeinflusst wird.

5. Verfahren nach einem der vorhergehenden Ansprüche, **dadurch gekennzeichnet, dass** eine Fahrbahndatenbank Referenzwerte der Fahrbahnparameter zugeordnet zu unterschiedlichen Fahrbahnzustandsklassen enthält, und dass durch einen Vergleich der aktuell gemessenen Fahrbahnparametern mit den Referenzwerten eine Bestimmung der aktuellen Fahrbahnklasse erfolgt.

6. Verfahren nach einem der vorhergehenden Ansprüche, **dadurch gekennzeichnet, dass** für die Geschwindigkeit und/oder die zurückgelegte Fahrstrecke des Fahrzeugs einerseits aus der Raddrehzahl und dem Radumfang ein erster Wert bestimmt wird, dass andererseits mittels eines globalen Positionssystems (GPS) ein zweiter Wert bestimmt wird, und dass aus der Differenz zwischen dem ersten Wert und dem zweiten Wert der Reifenverschleiß als Reifenparameter berechnet wird.

7. Verfahren nach Anspruch 6, **dadurch gekennzeichnet, dass** der ermittelte Reifenverschleiß als Einflussgröße zur Bestimmung wesentlicher Fahrzeugeigenschaften, wie Rollwiderstand, Reifenhaftung, Schlupf, herangezogen wird.

8. Verfahren nach Anspruch 7, **dadurch gekennzeichnet, dass** die Bestimmung von Fahrzeugeigenschaften in Abhängigkeit vom Reifenverschleiß mittels gespeicherter reifenspezifischer Kennlinien erfolgt.

9. Verfahren nach einem der vorhergehenden Ansprüche, **dadurch gekennzeichnet, dass** die Regelung des Reifendrucks auch unter Berücksichtigung von reifendruckabhängigen Treibstoff- und Reifenkosten erfolgt.

10. Verfahren nach einem der vorhergehenden Ansprüche, **dadurch gekennzeichnet, dass** zur maximalen Traktionsverbesserung beim Anfahren und/oder im sonstigen Fahrbetrieb eine Absenkung des Reifendrucks auf den zulässigen reifenspezifischen Mindestdruck erfolgt.

11. Vorrichtung dazu ausgebildet das Verfahren nach einem der vorhergehenden Ansprüche durchzuführen, wobei eine Reifendruckregelanlage (1) vorgesehen ist, mittels der von Sensoren (3 bis 5; 10, 15, 16) und von anderen Fahrzeugeinrichtungen (6, 7) Fahrbetriebsparameter und Fahrzeugparameter empfangbar und zur Regelung des Reifendrucks auswertbar sind, wobei Radargeräte (LR, SR), Kamerasysteme (11), Infrarotsysteme (12) und/oder Schallsensoren vorgesehen sind, mittels denen vom Zustand der Fahrbahnoberfläche beeinflusste Signale empfangbar und zur Klassifizierung des Fahrbahnzustands einer Klassifizierungseinrichtung (14) als Fahrbahnparameter übermittelbar sind, wobei die Fahrbahnparameter, die den aktuellen Fahrbahnzustand betreffen, während des Fahrbetriebs erfassbar sind, wobei in Abhängigkeit von den Fahrbahnparametern die Regelung des Reifendrucks beeinflussbar ist, wobei der Reifendruck je nach Einsatzbedingungen und Zustand des Fahrzeugs und unter Berücksichtigung von Reifenparametern in einem Bereich zwischen dem reifenspezifischen und/oder belastungsspezifischen Maximaldruck und Mindestdruck regelbar ist, **dadurch gekennzeichnet, dass** die abgespeicherten Reifenparameter die Veränderung der Reifeneigenschaften in Abhängigkeit vom Reifenverschleiß berücksichtigen.

12. Vorrichtung nach Anspruch 11, **dadurch gekennzeichnet, dass** mittels im Fahrzeug vorhandener Fahrsicherheitssysteme (7) und/oder deren Sensoren (10) Fahrbetriebsparameter an die Fahrbahnklassifizierungseinrichtung (14) übermittelbar sind.

**Claims**

1. Method for regulating the tyre pressure of vehicles, in particular utility vehicles, as a function of driving operating parameters and of vehicle parameters, wherein during the driving operation carriageway parameters which relate to the current state of the carriageway are acquired, wherein the regulation of the tyre pressure is influenced as a function of the carriageway parameters, wherein the regulation of the tyre pressure takes place depending on the conditions of use and state of the vehicle and taking into account tyre parameters in a range between the tyre-specific and/or load-specific maximum pressure and minimum pressure, **characterized in that** the stored tyre parameters take into account the change in the properties of the tyres as a function of the tyre wear.

2. Method according to Claim 1, **characterized in that** the carriageway parameters are used to classify the current carriageway state and/or rolling resistance of the carriageway and/or the coefficient of friction of the carriageway, and **in that** the regulation of the tyre pressure takes place taking into account the current classification.

3. Method according to Claim 2, **characterized in that** a predetermined number of carriageway state classes and/or rolling resistance classes and/or carriageway coefficient-of-friction classes are provided for the classification, and **in that** at least one of these classes is selected on the basis of the current carriageway parameters and is taken into account for the regulation of the tyre pressure.

4. Method according to one of the preceding claims, **characterized in that** the coefficient of friction of the carriageway is determined by evaluating sound signals and/or radar signals and/or image information, and **in that** the regulation of the tyre pressure is influenced as a function of the coefficient of friction of the carriageway.

5. Method according to one of the preceding claims, **characterized in that** a carriageway database contains reference values of the carriageway parameters assigned to different carriageway state classes, and **in that** the current carriageway class is determined by comparing the currently measured carriageway parameters with the reference values.

6. Method according to one of the preceding claims, **characterized in that**, for the speed and/or the distance travelled by the vehicle, on the one hand a first value is determined from the wheel rotational speed and the wheel circumference, **in that**, on the other hand, a second value is determined by means of a global positioning system (GPS), and **in that** the tyre wear is calculated as a tyre parameter from the difference between the first value and the second value.

7. Method according to Claim 6, **characterized in that** the determined tyre wear is used as an influencing variable for determining significant properties of the vehicle such as the rolling resistance, grip of the tyres, slip.

8. Method according to Claim 7, **characterized in that** properties of the vehicle are determined as a function of the tyre wear by means of stored tyre-specific characteristic curves.

9. Method according to one of the preceding claims, **characterized in that** the regulation of the tyre pressure also takes place taking into account tyre-pressure-dependent fuel costs and tyre costs.

10. Method according to one of the preceding claims, **characterized in that**, in order to improve the traction to a maximum extent when starting and/or in the rest of the driving operation, the tyre pressure is reduced to the permissible tyre-specific minimum pressure.

11. Device designed to carry out the method according to one of the preceding claims, wherein a tyre pressure regulating system (1) is provided, by means of which driving operation parameters and vehicle parameters can be received from sensors (3 to 5; 10, 15, 16) and from other vehicle devices (6, 7), and can be evaluated in order to regulate the tyre pressure, wherein radar devices (LR, SR), camera systems (11), infrared systems (12) and/or sound sensors are provided, by means of which signals which are influenced by the state of the surface of the carriageway can be received and can be transferred to a classification device (14) as carriageway which parameters for the classification of the carriageway state, wherein the carriageway parameters relate to the current carriageway state can be acquired during the driving operation, wherein the regulation of the tyre pressure can be influenced as a function of the carriageway parameters, wherein the tyre pressure can be regulated depending on the conditions of use and state of the vehicle and taking into account tyre parameters in a range between the tyre-specific and/or load-specific maximum pressure and minimum pressure, **characterized in that** the stored tyre parameters take into account the change in the properties of the tyres as a function of the tyre wear.

12. Device according to Claim 11, **characterized in that** driving operation parameters can be transmitted to the carriageway classification device (14) by means of driving safety systems (7) and/or their sensors (10) which are present in the vehicle.

**Revendications**

1. Procédé de réglage de la pression des pneus de véhicules, en particulier de véhicules utilitaires, en fonction de paramètres de roulage et de paramètres du véhicule, dans lequel on détecte pendant le roulage des paramètres de la chaussée, qui concernent l'état actuel de la chaussée, dans lequel le réglage de la pression des pneus est influencé en fonction des paramètres de la chaussée, dans lequel on effectue le réglage de la pression des pneus à la fois selon les conditions d'utilisation et l'état du véhicule et en tenant compte de paramètres des pneus dans une plage comprise entre la pression maximale et la pression minimale spécifiques au pneu et/ou spécifiques à la charge, **caractérisé en ce que** les paramètres des pneus mémorisés tiennent compte de la variation des propriétés des pneus en fonction de l'usure des pneus.

2. Procédé selon la revendication 1, **caractérisé en ce que** l'on utilise les paramètres de la chaussée pour classer l'état actuel de la chaussée et/ou la résistance au roulage de la chaussée et/ou le coefficient de frottement de la chaussée, et **en ce que** l'on effectue le réglage de la pression des pneus en tenant compte du classement actuel.

3. Procédé selon la revendication 2, **caractérisé en ce qu'**il est prévu pour le classement un nombre prédéterminé de classes d'état de la chaussée et/ou de classes de résistance au roulage et/ou de classes de coefficient de frottement de la chaussée, et **en ce qu'**on choisit au moins une de ces classes à l'aide des paramètres actuels de la chaussée et on en tient compte pour le réglage de la pression des pneus.

4. Procédé selon l'une quelconque des revendications précédentes, **caractérisé en ce que** l'on détermine le coefficient de frottement de la chaussée en analysant des signaux sonores et/ou des signaux radar et/ou des informations d'images, et **en ce que** le réglage de la pression des pneus est influencé en fonction du coefficient de frottement de la chaussée.

5. Procédé selon l'une quelconque des revendications précédentes, **caractérisé en ce qu'**une banque de données de la chaussée contient des valeurs de référence des paramètres de la chaussée associées à différentes classes d'état de la chaussée, et **en ce que** l'on opère une détermination de la classe actuelle de la chaussée par une comparaison des paramètres actuellement mesurés de la chaussée avec les valeurs de référence.

6. Procédé selon l'une quelconque des revendications précédentes, **caractérisé en ce que** l'on détermine une première valeur pour la vitesse et/ou pour la distance parcourue du véhicule d'une part à partir de la vitesse de rotation des roues et du périmètre des roues, **en ce que** l'on détermine une seconde valeur d'autre part au moyen d'un système global de localisation (GPS), et **en ce que** l'on calcule à partir de la différence entre la première valeur et la seconde valeur l'usure des pneus comme paramètre des pneus.

7. Procédé selon la revendication 6, **caractérisé en ce que** l'on utilise l'usure des pneus déterminée comme grandeur d'influence pour la détermination de propriétés essentielles des pneus, comme la résistance au roulage, l'adhérence des pneus, le patinage.

8. Procédé selon la revendication 7, **caractérisé en ce que** l'on opère la détermination de propriétés des pneus en fonction de l'usure des pneus au moyen de courbes caractéristiques spécifiques des pneus mémorisées.

9. Procédé selon l'une quelconque des revendications précédentes, **caractérisé en ce que** l'on effectue le réglage de la pression des pneus en tenant compte également des frais de carburant et des frais de pneus dépendant de la pression des pneus.

10. Procédé selon l'une quelconque des revendications précédentes, **caractérisé en ce que** l'on opère une baisse de la pression des pneus à la pression minimale admissible spécifique aux pneus pour une amélioration maximale de la traction au démarrage et/ou dans d'autres situations de roulage.

11. Dispositif configuré pour mettre en oeuvre le procédé selon l'une quelconque des revendications précédentes, dans lequel il est prévu une installation de réglage de la pression des pneus (1), au moyen de laquelle des paramètres de roulage et des paramètres du véhicule peuvent être reçus de capteurs (3 à 5 ; 10, 15, 16) et d'autres dispositifs du véhicule (6, 7) et peuvent être exploités pour le réglage de la pression des pneus, dans lequel il est prévu des appareils radar (LR, SR), des systèmes de caméras (11), des systèmes infrarouges (12) et/ou d'autres capteurs sonores, au moyen desquels des signaux influencés par l'état de la chaussée peuvent être reçus et peuvent être transmis à un dispositif de classement (14) en tant que paramètres de la chaussée pour le classement de l'état de la chaussée, dans lequel les paramètres de la chaussée, qui concernent l'état actuel de la chaussée, peuvent être détectés pendant le roulage, dans lequel le réglage de la pression des pneus peut être influencé en fonction des paramètres de la chaussée, dans lequel la pression des pneus peut être réglée à la fois selon les conditions d'utilisation et selon l'état du véhicule et en tenant compte de paramètres de pneus dans une plage comprise entre la pression maximale et la pression minimale spécifiques aux pneus et/ou spécifiques à la charge, **caractérisé en ce que** les paramètres de pneus mémorisés tiennent compte de la variation des propriétés des pneus en fonction de l'usure des pneus.

12. Dispositif selon la revendication 11, **caractérisé en ce que** des paramètres de roulage peuvent être transmis au dispositif de classement de la chaussée (14) au moyen de systèmes de sécurité de roulage (7) présents dans le véhicule et/ou de leurs capteurs (10).

aktuelle Reifendrücke Drucksensoren — 3

aktuelle Achslasten Wegsensoren Achse — 4

aktuelle Fahrgeschwindigkeit Raddrehzahlsensoren — 5

Reifenverschleiss als Rechengrösse GPS/-Radsensorgeschwindigkeit — 6

2

2

2

Reifendruck-regelanlage — 1

2

2

Reifenkennfelder für Reifentyp und -größe — 16

aktuelle Fahrbahn-zustandklasse

aktuelle Rollwiderstands-klasse der Fahrbahn

aktuelle Fahrbahn-reibwertklasse

14

weitere Sensoren/-größen — 15
Echo (akustische Reflexion)
Federungsgeschwindigkeit
Ultraschallsensor
Aussen-, Reifentemperatur

Fahrsicherheitssysteme — 7

Fahrspur-assistent — 9

Abstands-regler — 8

Sensoren der Fahrsicherheitssysteme — 10

Radar LR

Radar SR

Video-Kamera-Sicht — 11

Infrarot-Nachtsicht — 12

13

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4014379 A1
- DE 4109392 A1
- DE 102004051197 A1
- DE 10336330 B3
- US 20070068238 A1
- DE 10306498 A1